# EUROPEAN PATENT APPLICATION

(11) **EP 4 687 178 A1**
(43) Date of publication of application: **04.02.2026**
(21) Application number: 25193550.8
(22) Date of filing: 01.08.2025
(51) Int. Cl.: H01M 4/04, H01M 4/139, H01M 4/13

(54) **ELECTRODE, SECONDARY BATTERY, AND ELECTRODE MANUFACTURING DEVICE**

(30) Priority: 01.08.2024 KR 20240102298
(71) Applicant: SAMSUNG SDI CO., LTD., Yongin-si, Gyeonggi-do 17084 (KR)
(72) Inventor: LEE, Hyun Jin, 16678 Suwon-si (KR); JANG, Min Young, 16678 Suwon-si (KR)
(74) Representative: Marks & Clerk LLP

(57) **Abstract**

An electrode, including a substrate, a first coating layer on the substrate, the first coating layer having a first thickness, a second coating layer at one side of the first coating layer, the second coating layer being on the substrate and having a second thickness, and an insulating layer at one side of the second coating layer, the insulating layer being on the substrate.

## Description

### BACKGROUND

### 1. Field

The present disclosure relates to an electrode, a secondary battery including the electrode, and an electrode manufacturing device for manufacturing the electrode.

### 2. Description of the Related Art

Secondary batteries are batteries that can be charged and discharged, unlike primary batteries that cannot be recharged. Low-capacity secondary batteries are used in small portable electronic devices such as smartphones, feature phones, laptop computers, digital cameras, and camcorders, and high-capacity secondary batteries are widely used as motor driving power sources, power storage batteries, and the like in hybrid vehicles, electric vehicles, and the like. These secondary batteries include electrode(s) including a positive electrode and/or a negative electrode, an electrode assembly including the electrode(s), a case which accommodates the electrode assembly, and an electrode terminal connected to the electrode assembly.

As technology advances, high-capacity secondary batteries are required. Accordingly, a plurality of secondary batteries can be used by being electrically connected. For example, the secondary batteries can be applied to electronic devices in the form of a secondary battery module including a plurality of secondary batteries and/or a secondary battery pack including a plurality of secondary battery modules. In this case, the electronic devices are electronic devices requiring high output and/or high capacity and include, for example, electric vehicles and the like.

The electrode includes a substrate and a coating layer formed on the substrate. The coating layer is formed by coating the substrate with a slurry by a coating die and then drying the slurry. Thereafter, the electrode is formed through rolling and slitting processes.

The electrodes manufactured in this way are stacked along with a separator to form an electrode assembly. For example, the electrode assembly includes a negative electrode, a positive electrode, and a separator located between the negative electrode and the positive electrode.

The above-described information disclosed in the background technology of the present disclosure is only for improving understanding of the background of the present disclosure, and accordingly, may include information that does not constitute the related art.

### SUMMARY

Embodiments include an electrode, including a substrate, a first coating layer (formed) on the substrate, the first coating layer having a first thickness, a second coating layer (located) at one side of the first coating layer, the second coating layer being on (or formed on) the substrate and having a second thickness, and an insulating layer (located) at one side of the second coating layer, the insulating layer being on (or formed on) the substrate.

The second thickness may be (formed to be) less than the first thickness.

The second thickness may be 10% to 80% of the first thickness.

The first coating layer and the second coating layer may be discontinuous, the first coating layer and the second coating layer having a step therebetween. In other words, the first coating layer and second coating layer may be discontinuously formed while forming a step.

The insulating layer may be (formed) spaced apart from one side of the second coating layer at a predetermined (or certain) interval.

The predetermined (or certain) interval may be 1 µm or less.

The insulating layer may cover at least a portion of the second coating layer.

The insulating layer may have (or may be formed with) a thickness smaller than or equal to the first thickness and greater than or equal to the second thickness.

Embodiments include a secondary battery, including an electrode assembly including an electrode and a separator in a stack (or formed by stacking an electrode and a separator), and a case accommodating (or that accommodates) the electrode assembly, wherein the electrode includes a substrate, a first coating layer (formed) on the substrate, the first coating layer having a first thickness, a second coating layer (located) at one side of the first coating layer, the second coating layer being on (or formed on) the substrate and having a second thickness, and an insulating layer (located) at one side of the second coating layer, the insulating layer being on (or formed on) the substrate.

The second thickness may be (formed to be) less than the first thickness.

The second thickness may be 10% to 80% of the first thickness.

The first coating layer and the second coating layer may be discontinuous, the first coating layer and the second coating layer having a step therebetween. In other words, the first coating layer and second coating layer may be discontinuously formed while forming a step.

The insulating layer is spaced apart from one side of the second coating layer at a predetermined (or certain) interval.

The predetermined (or certain) interval may be 1 µm or less.

The insulating layer may cover at least a portion of the second coating layer.

The insulating layer may have (or may be formed with) a thickness smaller than or equal to the first thickness and greater than or equal to the second thickness.

Embodiments include an electrode manufacturing device, including a first spacer to coat a substrate with a first coating layer at a first thickness, and a second spacer to coat a second coating layer at a second thickness at one side of the first coating layer, wherein the first spacer has (or is formed with) a larger width than the second spacer, and the second spacer coats an insulating layer at one side of the second coating layer.

At least some of the above and other features of the invention are set out in the claims.

### BRIEF DESCRIPTION OF THE DRAWINGS

Features will become apparent to those of ordinary skill in the art by describing in detail example embodiments with reference to the attached drawings, in which:
FIGS. 1 to 4 are views schematically showing a secondary battery according to an embodiment of the present disclosure;
FIG. 5 is a view schematically showing a conventional electrode assembly;
FIG. 6 is a cross-sectional view schematically showing an electrode according to an embodiment of the present disclosure;
FIG. 7 is a cross-sectional view schematically showing an electrode according to an embodiment of the present disclosure;
FIG. 8 is a view showing a first spacer according to an embodiment of the present disclosure;
FIG. 9 is a view showing a second spacer according to an embodiment of the present disclosure; and
FIG. 10 is a view schematically showing an electrode assembly according to an embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Unless otherwise specifically mentioned in the present specification, a case in which a part such as a layer, a film, a region, a plate, or the like is "on" another part includes not only a case in which the part is "directly on" another part, but also a case in which there is still another part therebetween.

Unless otherwise specifically mentioned in the present specification, a singular form may also include a plural form. In addition, unless otherwise specifically mentioned, "A or B" may mean "including A, including B, or including A and B".

In the present specification, "a combinations thereof" may mean a mixture, a laminate, a compound, a copolymer, an alloy, a blend, and a reaction product of compositions.

Unless otherwise separately defined in the present specification, a particle diameter may be an average particle diameter. The particle diameter also means an average particle diameter (D50) which is a diameter of particles with a cumulative volume of 50% by volume in the particle size distribution. The average particle diameter (D50) may be measured by methods widely known to those skilled in the art, for example, by a particle size analyzer, or may be measured by transmission electron micrographs or scanning electron micrographs. Alternatively, the average particle diameter (D50) may be acquired by measuring the average particle diameter (D50) using a measurement device using a dynamic light scattering method, performing data analysis to count the number of particles in each particle size range, and then calculating the average particle diameter (D50) therefrom. Alternatively, the average particle diameter (D50) may be measured using a laser diffraction method. When the average particle diameter (D50) is measured using the laser diffraction method, more specifically, after dispersing the particles to be measured in a dispersion medium and then introducing the particles into a commercially available laser diffraction particle size measurement device (for example, Microtrac MT 3000) and irradiating ultrasonic waves of about 28 kHz at power of 60 W, the average particle size (D50) based on 50% of the particle size distribution in the measurement device may be calculated.

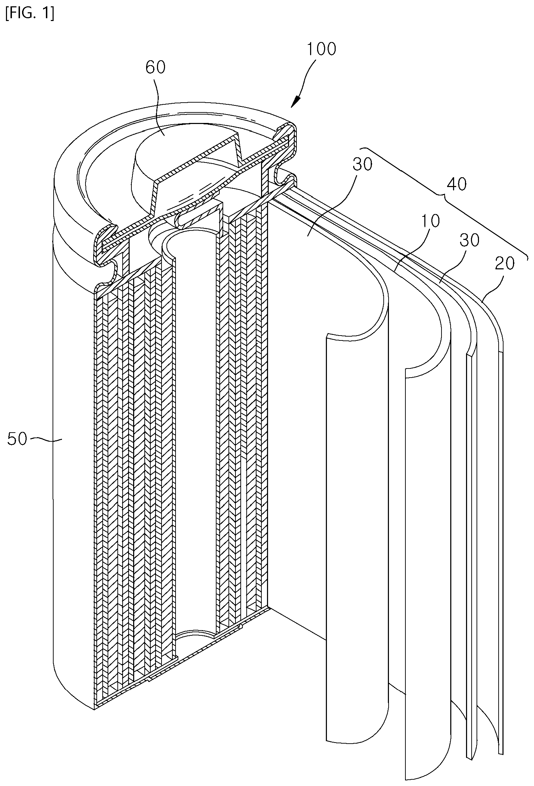

FIGS. 1 to 4 are views schematically showing a secondary battery according to an embodiment of the present disclosure.

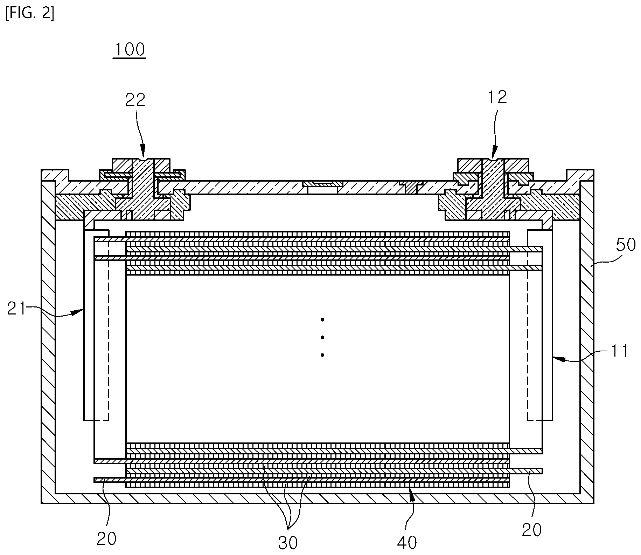

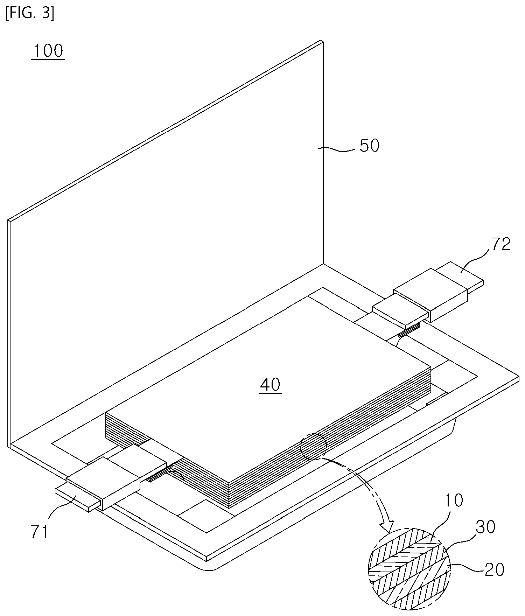

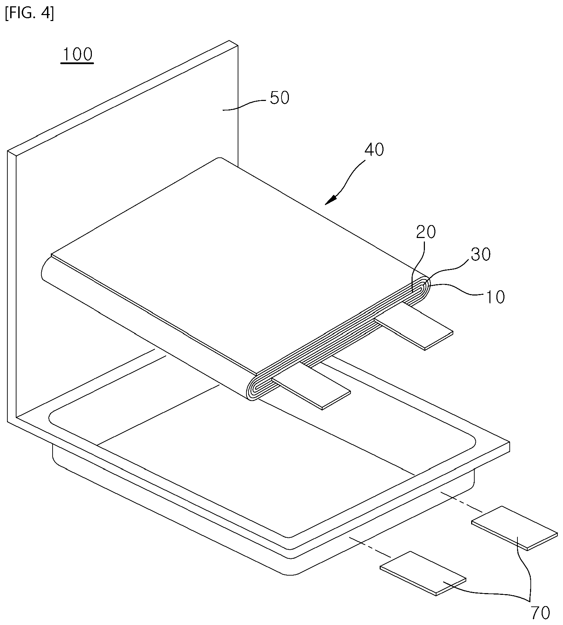

The secondary battery 100 may be classified into a cylindrical type, a prismatic type, a pouch type, a coin type, or the like according to its shape. FIGS. 1 to 4 are schematic views showing the secondary batteries according to an embodiment, where FIG. 1 shows a cylindrical battery, FIG. 2 shows a prismatic battery, and FIGS. 3 and 4 show a pouch-type battery.

Referring to FIGS. 1 to 4, the secondary battery 100 may include an electrode assembly 40 in which a separator 30 is interposed between a positive electrode 10 and a negative electrode 20, and a case 50 in which the electrode assembly 40 is built in (e.g., is accommodated). The positive electrode 10, the negative electrode 20, and the separator 30 may be impregnated with an electrolyte. As shown in FIG. 1, the secondary battery 100 may include a sealing member 60 which seals the case 50. Further, in FIG. 2, the secondary battery 100 may include a positive electrode lead tab 11, a positive electrode terminal 12, a negative electrode lead tab 21, and a negative electrode terminal 22. As shown in FIGS. 3 and 4, the secondary battery 100 may include electrode tabs 70, that is, a positive electrode tab 71 and a negative electrode tab 72, which serve as an electrical path for guiding a current generated in the electrode assembly 40 to the outside.

A compound capable of reversibly intercalating and deintercalating lithium (a lithiated intercalation compound) may be used as the positive electrode active material. Specifically, one or more types of a composite oxide of lithium and a metal selected from cobalt, manganese, nickel, and a combination thereof may be used.

The composite oxide may be a lithium transition metal composite oxide, and specific examples of the composite oxide may include lithium nickel oxide, lithium cobalt oxide, lithium manganese oxide, lithium iron phosphate compound, cobalt-free nickel-manganese oxide, or a combination thereof.

For example, a compound represented by any one of the chemical formulas below may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐNM_{1-b}G_{b}O₂ (0.90≤a≤1.8, 0.001≤b≤0.1); LiₐMn₂G_{b}O₄ (0.90≤a≤1.8, 0.001≤b≤0.1); LiₐNn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is Ni, Co, Mn, or a combination thereof, X is Al, Ni, Co, Mn, Cr, Fe, Mg, Sr, V, a rare earth element, or a combination thereof, D is O, F, S, P, or a combination thereof, G is Al, Cr, Mn, Fe, Mg, La, Ce, Sr, V, or a combination thereof, and L¹ is Mn, Al, or a combination thereof.

For example, the positive electrode active material may be a high nickel positive electrode active material having a nickel content of 80 mol% or more, 85 mol% or more, 90 mol% or more, 91 mol% or more, or 94 mol% or more and 99 mol% or less based on 100 mol% of metals excluding lithium in the lithium transition metal composite oxide. The high nickel positive electrode active material may implement high capacity, and thus may be applied to high capacity, high density secondary batteries.

The positive electrode 10 for the secondary battery 100 may include a current collector and a positive electrode active material layer formed on the current collector. The positive electrode active material layer may include a positive electrode active material and further include a binder and/or a conductive material.

For example, the positive electrode may further include an additive capable of serving as a sacrificial positive electrode.

A content of the positive electrode active material may be 90% to 99.5% by weight based on 100% by weight of the positive electrode active material layer and a content of the binder and the conductive material may each be 0.5% to 5% by weight based on 100% by weight of the positive electrode active material layer.

The binder serves to attach particles constituting the positive electrode active material to each other well, and also attach the positive electrode active material to the current collector well. Representative examples of the binder may include polyvinyl alcohol, carboxymethylcellulose, hydroxypropylcellulose, diacetylcellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, an epoxy resin, a (meth)acrylic resin, a polyester resin, nylon, and the like, but are not limited thereto.

The conductive material is used to impart conductivity to the electrode, and any material which does not cause a chemical change and is electronically conductive may be used. Examples of the conductive material may include a carbon material such as natural graphite, artificial graphite, carbon black, acetylene black, Ketjen black, carbon fibers, carbon nanofibers, carbon nanotubes, or the like, a metal material in the form of metal powder or metal fibers containing copper, nickel, aluminum, silver, or the like, a conductive polymer such as a polyphenylene derivative or the like, or a mixture thereof.

Al foil may be used as the current collector, but this may vary.

The negative electrode active material includes a material capable of reversibly intercalating and deintercalating lithium ions, lithium metal, an alloy of lithium and a metal, a material capable of doping and dedoping lithium, or a transition metal oxide.

The material capable of reversibly intercalating and deintercalating lithium ions may include a carbon negative electrode active material, for example, crystalline carbon, amorphous carbon, or a combination thereof. Examples of the crystalline carbon may include graphite such as amorphous, plate-shaped, flaky, spherical, or fibrous natural graphite or artificial graphite, and examples of the amorphous carbon may include soft carbon or hard carbon, mesophase pitch carbide, calcined coke, or the like.

An alloy of lithium and a metal selected from Na, K, Rb, Cs, Fr, Be, Mg, Ca, Sr, Si, Sb, Pb, In, Zn, Ba, Ra, Ge, Al, and Sn may be used as the alloy of lithium and a metal.

An Si negative electrode active material or a Sn negative electrode active material may be used as the material capable of doping and dedoping lithium. The Si negative electrode active material may include silicon, a silicon-carbon composite, SiOₓ (0 < x ≤ 2, e.g., SiO₂), an Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn negative electrode active material may be Sn, SnO₂, a Sn alloy, or a combination thereof.

The silicon-carbon composite may be a composite of silicon and amorphous carbon. According to an embodiment, the silicon-carbon composite may be in the form of silicon particles whose surfaces are coated with amorphous carbon. For example, the silicon-carbon composite may include a secondary particle (a core) in which silicon primary particles are assembled, and an amorphous carbon coating layer (a shell) located on the surface of the secondary particle. The amorphous carbon may also be located between the silicon primary particles, and for example, the silicon primary particles may be coated with amorphous carbon. The secondary particles may be dispersed in an amorphous carbon matrix.

The silicon-carbon composite may further include crystalline carbon. For example, the silicon-carbon composite may include a core containing crystalline carbon and silicon particles, and an amorphous carbon coating layer located on the surface of the core.

The Si negative electrode active material or the Sn negative electrode active material may be used in combination with the carbon negative electrode active material.

The negative electrode 20 for the secondary battery 100 may include a current collector and a negative electrode active material layer located on the current collector. The negative electrode active material layer may include a negative electrode active material and further include a binder and/or a conductive material.

For example, the negative electrode active material layer may include the negative electrode active material in an amount of 90% to 99.5% by weight, the binder in an amount of 0.5% to 5% by weight, and the conductive material in an amount of 0% to 5% by weight.

The binder serves to attach particles constituting the negative electrode active material to each other well, and also attach the negative electrode active material to the current collector well. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and a combination thereof.

When the aqueous binder is used as the negative electrode binder, a cellulose compound capable of imparting viscosity may be further included. As the cellulose compound, one or more of carboxymethyl cellulose, hydroxypropylmethyl cellulose, methyl cellulose, and alkali metal salts thereof may be used in combination. Na, K, or Li may be used as the alkali metal.

The dry binder is a polymer material which may be fiberized and may be, for example, polytetrafluoroethylene, polyvinylidene fluoride, a polyvinylidene fluoride-hexafluoropropylene copolymer, polyethylene oxide, or a combination thereof.

The conductive material is used to impart conductivity to the electrode, and any material which does not cause a chemical change and is electronically conductive may be used. Specific examples of the conductive material may include a carbon material such as natural graphite, artificial graphite, carbon black, acetylene black, Ketjen black, carbon fibers, carbon nanofibers, carbon nanotubes, or the like, a metal material in the form of metal powder or metal fibers containing copper, nickel, aluminum, silver, or the like, a conductive polymer such as a polyphenylene derivative or the like, or a mixture thereof.

The negative electrode current collector may be selected from copper foil, nickel foil, stainless steel foil, titanium foil, nickel foam, copper foam, a polymer substrate coated with a conductive metal, and a combination thereof.

The electrolyte for the secondary battery 100 includes a non-aqueous organic solvent and a lithium salt.

The non-aqueous organic solvent serves as a medium through which ions involved in an electrochemical reaction of the battery may move.

The non-aqueous organic solvent may be a carbonate solvent, an ester solvent, an ether solvent, a ketone solvent, an alcohol solvent, an aprotic solvent, or a combination thereof.

As the carbonate solvent, dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), or the like may be used.

As the ester solvent, methyl acetate, ethyl acetate, n-propyl acetate, dimethyl acetate, methyl propionate, ethyl propionate, decanolide, mevalonolactone, valerolactone, caprolactone, or the like may be used.

As the ether solvent, dibutyl ether, tetraglyme, diglyme, dimethoxyethane, 2-methyltetrahydrofuran, 2,5-dimethyltetrahydrofuran, tetrahydrofuran, or the like may be used. Further, as the ketone solvent, cyclohexanone may be used. As the alcohol solvent, ethyl alcohol, isopropyl alcohol, or the like may be used, and as the aprotic solvent, nitriles such as R-CN (R is a linear, branched, or cyclic hydrocarbon group having 2 to 20 carbon atoms and may include double bonds, an aromatic ring, or an ether group) and the like, amides such as dimethylformamide and the like, dioxolanes such as 1,3-dioxolane, 1,4-dioxolane, and the like, sulfolanes, and the like may be used.

The non-aqueous organic solvent may be used alone or in a mixture of two or more.

Further, when the carbonate solvent is used, a mixture of a cyclic carbonate and a chain carbonate may be used, and the cyclic carbonate and the chain carbonate may be mixed in a volume ratio of 1:1 to 1:9.

The lithium salt is a material which dissolves in an organic solvent and serves as a source of lithium ions in the battery to enable the basic operation of a secondary battery and promote the movement of lithium ions between the positive electrode and the negative electrode. Representative examples of the lithium salts may include one or more selected from LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide (LiFSI), LiC₄F₉SO₃, LiN(CₓF₂ₓ₊₁SO₂)(C_{y}F_{2y+1}SO₂) (x and y are integers from 1 to 20), lithium trifluoromethane sulfonate, lithium tetrafluoroethanesulfonate, lithium difluorobis(oxalato)phosphate (LiDFBOP), and lithium bis(oxalato)borate (LiBOB).

The separator 30 may be present between the positive electrode 10 and the negative electrode 20 depending on the type of secondary battery 100. As the separator 30, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, a polypropylene/polyethylene/polypropylene three-layer separator, or the like may be used.

The separator 30 may include a porous substrate and a coating layer containing an organic material, an inorganic material, or a combination thereof located on one side or both sides of the porous substrate.

The porous substrate may be a polymer film formed of one polymer selected from polyolefins such as polyethylene and polypropylene, polyesters such as polyethylene terephthalate and polybutylene terephthalate, polyacetal, polyamide, polyimide, polycarbonate, polyetherketone, polyaryletherketone, polyetherimide, polyamideimide, polybenzimidazole, polyether sulfone, polyphenylene oxide, a cyclic olefin copolymer, polyphenylene sulfide, polyethylene naphthalate, glass fibers, Teflon, and polytetrafluoroethylene or a copolymer or mixture of two or more thereof.

The organic material may include a polyvinylidene fluoride polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be present as a mixture in one coating layer, or present in a form in which a coating layer containing an organic material and a coating layer containing an inorganic material are stacked.

As described in FIGS. 1 to 4, the secondary battery 100 according to an embodiment of the present disclosure includes the electrode assembly 40 and the case 50 which accommodates the electrode assembly 40. In this case, the electrode assembly 40 includes a positive electrode 10, a negative electrode 20, and the separator 30 provided between the positive electrode 10 and the negative electrode 20. In this case, the positive electrode 10 and/or the negative electrode 20 may be collectively referred to as the electrodes. The electrodes are described in more detail below.

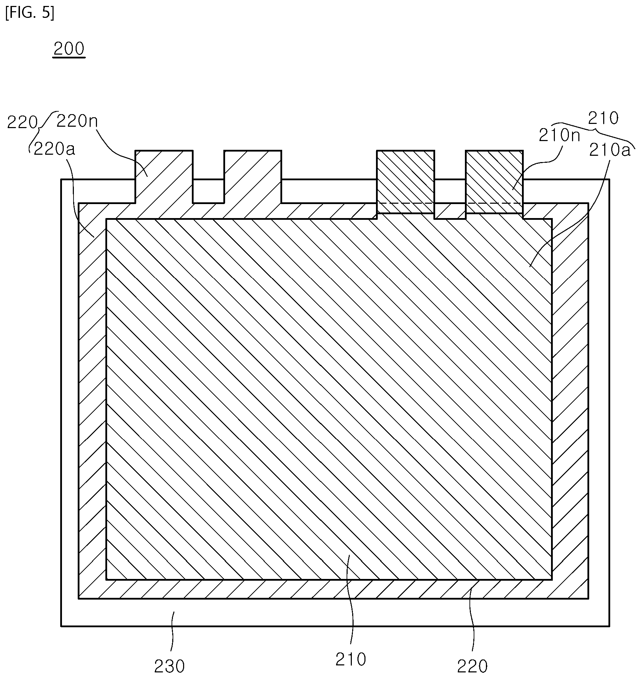

FIG. 5 is a view schematic view showing a comparative electrode assembly.

As described in FIGS. 1 to 4, the secondary battery 100 includes an electrode assembly 200 (for example, including the electrode assembly 40 described in FIGS. 1 to 4). FIG. 5 shows the electrode assembly 200.

The electrode assembly 200 may include electrodes including a first electrode 210 and a second electrode 220, and a separator 230 disposed between the first electrode 210 and the second electrode 220. In this case, for example, the first electrode 210 includes a positive electrode 10 or a negative electrode 20. Further, for example, the second electrode 220 includes a negative electrode 20 or a positive electrode 10. That is, the first electrode 210 and the second electrode 220 may have different (e.g., opposite) potentials.

The electrode assembly 200 is formed by stacking the first electrode 210 and the second electrode 220 and the separator 230. For example, the electrode assembly 200 is formed by forming a jelly roll with the first electrode 210 and the second electrode 220 and the separator 230. In other embodiments, for example, the electrode assembly 200 is formed by forming a stack with the first electrode 210 and the second electrode 220 and the separator 230.

The first electrode 210 includes a coated portion 210a in which a coating layer is formed on a substrate and an uncoated portion 210n in which the substrate is exposed to the outside.

In this case, the substrate of the first electrode 210 includes the current collectors described in FIGS. 1 to 4. For example, when the first electrode 210 is a positive electrode, the substrate is a positive electrode current collector. For example, the positive electrode current collector includes aluminum (Al). For example, when the first electrode 210 is a negative electrode, the substrate is a negative electrode current collector. For example, the negative electrode current collector includes copper (Cu).

In this case, a coating layer of the first electrode 210 is a layer including the active material, binder, and/or conductive material described in FIGS. 1 to 4. The coating layer of the first electrode 210 is formed, for example, by a slurry applied on a portion of one side or both sides of the substrate.

In this case, the uncoated portion 210n may extend from the coated portion 210a and serve as a tab of the first electrode 210. In this case, the tab electrically connects the first electrode 210 to the outside. For example, although not shown, the tab connects the first electrode 210 to a lead tab. The uncoated portion 210n may be formed in a state in which a portion is notched to more efficiently serve as the tab and avoid contact with the second electrode 220. Accordingly, as shown in FIG. 5, the uncoated portion 210n may be formed in a shape extending from a portion of the coated portion 210a.

The second electrode 220 includes a coated portion 220a in which a coating layer is formed on the substrate and an uncoated portion 220n in which the substrate is exposed to the outside.

In this case, the substrate of the second electrode 220 includes the current collectors described in FIGS. 1 to 4. For example, when the second electrode 220 is a positive electrode, the substrate is a positive electrode current collector. For example, the positive electrode current collector includes aluminum (Al). For example, when the second electrode 220 is a negative electrode, the substrate is a negative electrode current collector. For example, the negative electrode current collector includes copper (Cu).

In this case, a coating layer of the second electrode 220 is a layer including the active material, binder, and/or conductive material described in FIGS. 1 to 4. The coating layer of the second electrode 220 is formed, for example, by a slurry applied on a portion of one side or both sides of the substrate.

In this case, the uncoated portion 220n may extend from the coated portion 220a and serve as a tab of the second electrode 220. In this case, the tab electrically connects the second electrode 220 to the outside. For example, the tab connects the second electrode 220 to a lead tab. The uncoated portion 220n may be formed in a state in which a portion is notched to more efficiently serve as the tab and avoid contact with the first electrode 210. Accordingly, as shown in FIG. 5, the uncoated portion 220n may be formed in a shape extending from a portion of the coated portion 220a.

In this case, the uncoated portion 220n of the second electrode 220 may extend so as not to overlap the uncoated portion 210n of the first electrode 210.

As shown in FIG. 5, for example, the uncoated portion 210n of the first electrode 210 and the uncoated portion 220n of the second electrode 220 may respectively extend in the same direction from upper sides of the coated portions 210a and 220a. In this case, the uncoated portion 210n of the first electrode 210 may extend from one side of the upper side of the coated portion 210a of the first electrode (e.g., the right side in the orientation of FIG. 5). Further, the uncoated portion 220n of the second electrode may extend from the other side (e.g., the left (opposite) side in the orientation shown in FIG. 5) of the upper side of the coated portion 220a of the second electrode.

In other embodiments, unlike as shown in FIG. 5, for example, the uncoated portion 210n of the first electrode 210 and the uncoated portion 220n of the second electrode 220 may respectively extend in different directions from different sides of the coated portions 210a and 220a. For example, the uncoated portion 210n of the first electrode 210 may extend from the right or left side of the coated portion 210a of the first electrode 210 toward the right or left (in the orientation shown). Further, for example, the uncoated portion 220n of the second electrode 220 may extend from the left or right side of the coated portion 220a of the second electrode 220 toward the left or right (in the orientation shown).

Through this structure, the first electrode 210 and the second electrode 220 may prevent a short circuit between the uncoated portions 210n and 220n.

The separator 230 may be formed larger than the first electrode 210 and the second electrode 220. For example, the separator 230 may be formed larger than the coated portion 210a of the first electrode 210 and the coated portion 220a of the second electrode 220. Accordingly, the separator 230 may prevent a short circuit between the coated portion 210a of the first electrode 210 and the coated portion 220a of the second electrode 220.

Meanwhile, the separator 230 may contract as the secondary battery 100 is repeatedly charged and discharged. As cycles of the secondary battery 100 increase, a degree to which the separator 230 contracts may be greater. When the separator 230 contracts, the first electrode 210 and the second electrode 220 may come into contact with each other. For example, the uncoated portion 210n of the first electrode 210 and the coated portion 220a of the second electrode 220 may cause a short circuit when coming into contact with each other The separator 230 is generally formed to be larger than the first electrode 210 and the second electrode 220 in consideration of contraction. However, when a size of the separator 230 is formed too large compared to the first and second electrodes 210 and 220, a size of the secondary battery itself increases, and volume efficiency decreases.

Accordingly, a method of preventing the occurrence of a short circuit between the first electrode 210 and the second electrode 220 even when the separator 230 contracts is required.

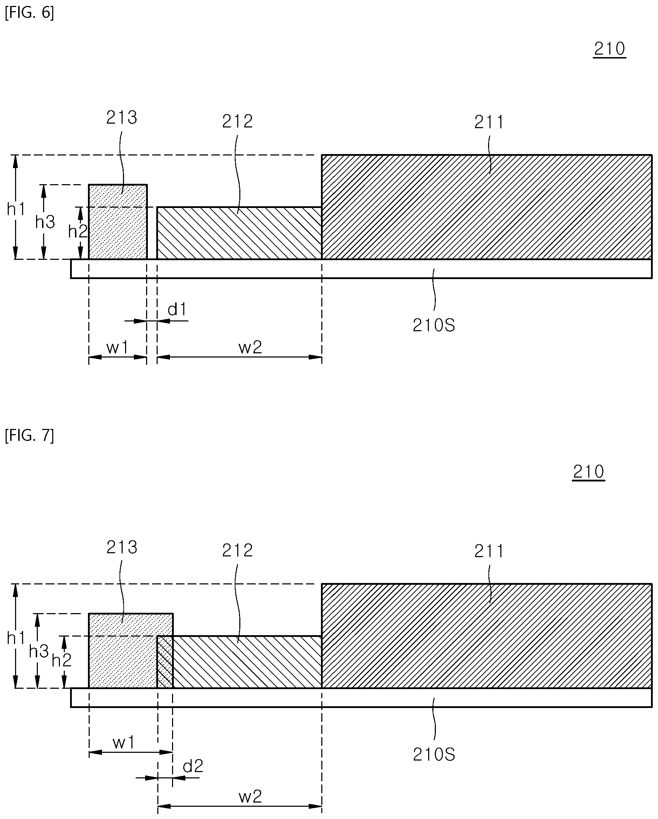

FIG. 6 is a cross-sectional view schematically showing an electrode according to an embodiment of the present disclosure.

FIG. 7 is a cross-sectional view schematically showing an electrode according to an embodiment of the present disclosure.

In FIGS. 6 and 7, 210 is an example of an electrode according to an embodiment of the present disclosure, and for example, includes a first electrode. However, the drawings for 210 are shown in FIGS. 6 and 7 not because the content to be described below is limited to the first electrode but for convenience of description. Accordingly, features to be described below may separately or simultaneously be applied to the first electrode 210 and/or the second electrode 220. Further, in FIGS 6 and 7, 210 may be referred to as an electrode for convenience.

An electrode 210 according to an embodiment of the present disclosure includes a substrate 210S, a first coating layer 211 formed on the substrate 210S with a first thickness h1, a second coating layer 212 located on one side (e.g., the left side in the orientation shown) of the first coating layer 211 and formed on the substrate 210S with a second thickness h2, and an insulating layer 213 located on one side of the second coating layer 212 and formed on the substrate 210S. The description of the electrode 210 may be the same as or similar to the description in FIGS.1 to 5.

The substrate 210S includes the current collector described in FIGS. 1 to 4. In other embodiments, the substrate 210S includes the substrate described in FIG. 5.

The first coating layer 211 includes the positive active material layer or the negative active material layer described in FIGS. 1 to 4. Alternatively, the first coating layer 211 includes the coating layer described in FIG. 5.

For example, the first coating layer 211 is formed by coating a slurry of a mixture of the active material, binder, and/or conductive material on the substrate 210S. The first coating layer 211 is coated on the substrate 210S to form a portion of the coated portion. The first coating layer 211 is coated on the substrate 210S with the first thickness h1.

In this case, the first coating layer 211 includes a lower surface located on the substrate 210S and an upper surface facing the lower surface and located away from the substrate 210S. The first thickness h1 is a thickness of the first coating layer 211, and for example, represents the shortest distance from the lower surface of the first coating layer 211 to the upper surface of the first coating layer 211. In this case, the first coating layer 211 may be formed so that the upper surface and/or the lower surface are not flat. In this case, the first thickness h1 represents an average of the shortest distances from the lower surface of the first coating layer 211 to the upper surface of the first coating layer 211.

The second coating layer 212 includes the positive active material layer or negative active material layer described in FIGS. 1 to 4. Alternatively, the second coating layer 212 includes the coating layer described in FIG. 5.

For example, the second coating layer 212 is formed by coating a slurry of a mixture of the active material, binder, and/or conductive material on the substrate 210S. The second coating layer 212 may include, for example, the same or similar material as the first coating layer 211. The second coating layer 212 is coated on the substrate 210S to form another portion of the coated portion. The second coating layer 212 is coated on the substrate 210S with the second thickness h2.

The second coating layer 212 includes a lower surface located on the substrate 210S and an upper surface facing the lower surface and located away from the substrate 210S. In this case, the second thickness h2 is a thickness of the second coating layer 212, and for example, represents the shortest distance from the lower surface of the second coating layer 212 to the upper surface of the second coating layer 212. In this case, the second coating layer 212 may be formed so that the upper surface and/or the lower surface are not flat. In this case, the second thickness h2 represents an average of the shortest distances from the lower surface of the second coating layer 212 to the upper surface of the second coating layer 212.

The second thickness h2 is formed to be less than the first thickness h1. For example, the second thickness h2 is formed to be 10% to 80% of the first thickness h1. In this way, the electrode 210 according to an embodiment of the present disclosure may be formed so that the heights of the coating layers are different at one side and the other side. Accordingly, the coating layers 211 and 212 may facilitate the coating of the insulating layer 213 to be described below.

The insulating layer 213 includes an insulating material. Accordingly, the insulating layer 213 may prevent a short circuit from occurring even when the adjacent electrodes 210 and 220 come into contact with each other while the separator 230 contracts.

In this case, the insulating layer 213 may be formed with a first width w1 from one side adjacent to the second coating layer 212 to the other side formed away from the second coating layer 212. The first width w1 may be formed, for example, to be 1 µm to 30 µm, but the first width w1 may vary.

Meanwhile, the second coating layer 212 may be formed with a second width w2 from one side adjacent to the first coating layer 211 to the other side formed away from the first coating layer 211. The second width w2 may be formed, for example, to be 1 mm to 5 mm, but the second width w2 may vary.

In this case, the insulating material includes, for example, an inorganic material, a resin, and the like.

The insulating layer 213 includes, for example, an inorganic material, a solvent, and a binder. The insulating layer 213 includes, for example, 10% to 50% by weight of an inorganic material, 40% to 90% by weight of a solvent, and 2% to 10% by weight of a binder.

The inorganic material may include, for example, at least one of silica, boehmite, alumina, talc, spherical glass, calcium carbonate, magnesium carbonate, magnesia, clay, calcium silicate, titanium oxide, antimony oxide, glass fiber, aluminum borate, barium titanate, strontium titanate, calcium titanate, magnesium titanate, bismuth titanate, titanium oxide, barium zirconate, calcium zirconate, boron nitride, silicon nitride, mica, and a combination thereof.

In this case, the silica includes, for example, natural silica, fused silica, amorphous silica, crystalline silica, or a combination thereof.

The solvent may include, for example, 1-methyl-2-pyrrolidinone (NMP), acetone, or a combination thereof.

The binder may include, for example, polyvinylidene fluoride (PVDF), styrene butadiene rubber (SBR), or a combination thereof.

Alternatively, the insulating layer 213 includes, for example, a resin and a solvent.

The resin may include, for example, at least one of a thermosetting resin, a thermoplastic resin, an ultraviolet (UV) curable resin, and a combination thereof.

In this case, the thermosetting resin includes, for example, an epoxy, a phenolic resin, a melamine resin, a urea resin, an unsaturated polyester resin, an alkyd resin, a silicone resin, a polyurethane resin, a polyimide, or a combination thereof.

In this case, the thermoplastic resin includes, for example, polytetrafluoroethylene, polyethylene, polyproplene, polystyrene, vinyl chloride, vinylidene chloride, a fluororesin, an acrylic resin, a polyvinyl acetate resin, a polyamide resin, polycarbonate, an acetal resin, polyphenylene oxide, polyester, polysulfone, or a combination thereof.

In this case, the UV curable resin includes, for example, urethane acrylate, unsaturated polyester, epoxy acrylate, oxetane, vinyl ether, polyester acrylate, silicone acrylate, an alicyclic epoxy resin, a glycidyl ether epoxy resin, or a combination thereof.

Further, a photopolymerization initiator used in an UV curable resin composition includes at least one of an alkylphenone polymerization initiator, an acylphosphine oxide photopolymerization initiator, a titanocene compound, an oxime ester compound, a benzoin compound, an acetophenone compound, a benzophenone compound, a thioxanthone compound, an α-acyl oxime ester compound, a phenylglyoxylate compound, a benzyl compound, an azo compound, a diphenylsulfide compound, an organochromic compound, an iron-phthalocyanine compound, a benzoinether compound, an anthraquinone compound, a diazonium salt, an iodine salt, a sulfonium salt, metallocenes, and a combination thereof.

In this case, the photopolymerization initiator may be 0.01% by mass to 10% by mass based on the total amount of the resin. In other embodiments, for example, the photopolymerization initiator may be 0.01% by mass to 5% by mass based on the total amount of the resin. In still other embodiments, for example, the photopolymerization initiator may be 0.01% by mass to 3% by mass based on the total amount of the resin]

The solvent includes, for example, an organic solvent or water. The organic solvent includes, for example, NMP, acetone, or a combination thereof.

The insulating layer 213 includes a lower surface located on the substrate 210S and an upper surface facing the lower surface and located away from the substrate 210S. In this case, the third thickness h3 is a thickness of the insulating layer 213, and for example, represents the shortest distance from the lower surface of the insulating layer 213 to the upper surface of the insulating layer 213. In this case, the insulating layer 213 may be formed so that the upper surface and/or the lower surface are not flat. In this case, the third thickness h3 represents an average of the shortest distances from the lower surface of the insulating layer 213 to the upper surface of the insulating layer 213.

The third thickness h3 may be, for example, 20 µm to 30 µm, but this may vary.

Meanwhile, the upper surface of the first coating layer 211 may be inclined. In this case, the first coating layer 211 may be formed so that a height of one side is lower than a height of the other side. In this case, the height of the other side is a height of a side of the first coating layer 211 located away from the second coating layer 212 (e.g., to the right in the orientation shown). In this case, the height of one side is a height of a side of the first coating layer 211 located adjacent to the second coating layer 212. In this case, the first thickness h1 is an average of the heights from one side to the other side of the first coating layer 211.

Further, for example, the upper surface of the second coating layer 212 may be inclined. In this case, the second coating layer 212 may be formed so that a height of one side is lower than a height of the other side. In this case, the height of the other side may be a height of a side of the second coating layer 212 located adjacent to the first coating layer 211. In this case, the height of one side may be a height of a side of the second coating layer 212 located away from the first coating layer 211. In this case, the second thickness h2 is an average of the heights from one side to the other side of the second coating layer 212.

In this case, the first coating layer 211 and the second coating layer 212 are discontinuously formed while forming a step therebetween.

For example, when the first coating layer 211 and/or the second coating layer 212 are inclined, the height of one side of the first coating layer 211 and the height of the other side of the second coating layer 212 are not the same. That is, not only are the average heights of the first coating layer 211 and the second coating layer 212 different, but also the heights between the other side of the first coating layer 211 and one side of the second coating layer 212 are differently formed.

When the step between the first coating layer 211 and the second coating layer 212 is not formed, the insulating layer 213 may be coated not only on the second coating layer 212 but also on the first coating layer 211 by running dispersion. In this case, the insulating layer 213 causes the first coating layer 211, which is formed relatively thick, to have a thicker thickness. Accordingly, a protrusion may occur in the coating layer. The protrusion of the coating layer may cause deformation of the electrode or cause a short circuit with adjacent electrodes.

On the other hand, in the coating layer according to an embodiment of the present disclosure, the upper surface of the first coating layer 211 and the upper surface of the second coating layer 212 are not continuously connected and are discontinuously formed. The first coating layer 211 and the second coating layer 212 may solve the above-described problem through the step therebetween.

In this case, the third height h3 may be formed to be smaller than or equal to the first height h1 and greater than or equal to the second height h2. When the third thickness h3 is formed to exceed the first thickness h1, a protrusion may occur in the electrode due to the insulating layer 213. Accordingly, in order to prevent the protrusion, it is preferable that the third thickness h3 is formed to be smaller than or equal to the first thickness h1. Further, when the third thickness h3 is formed to be less than the second thickness h2, the insulating layer 213 may not protect the electrodes 210 when the separator 230 contracts. Accordingly, it is preferable that the third thickness h3 is formed to be greater than or equal to the second thickness h2 so as to enhance the stability of the electrode 210.

For example, as shown in FIG. 6, the insulating layer 213 is formed spaced apart from one side of the second coating layer 212 at a certain (e.g., predetermined) interval d1. In this case, the certain interval d1 is a real number greater than or equal to 0. The insulating layer 213 may be formed spaced apart from the second coating layer 212 at a certain interval while being adjacent to the second coating layer 212. The certain interval is, for example, 1 µm or less. Accordingly, the insulating layer 213 may be provided at the other side of the second coating layer 212 without over-covering the second coating layer 212 even when there is running dispersion. In this case, the certain interval may be, for example, 0. Accordingly, the insulating layer 213 may enhance the safety of the electrode 210 without reducing the capacity of the electrode 210.

Alternatively, for example, as shown in FIG. 7, the insulating layer 213 covers at least a portion of the second coating layer 212. That is, the insulating layer 213 may be formed spaced apart from one side of the second coating layer 212 at a certain interval d2. In this case, the certain interval d2 is a real number less than 0. That is, the certain interval d1 and the certain interval d2 may include opposite directions. The insulating layer 213 may be stably formed at one side of the electrode 210 while covering at least a portion of an upper portion of the second coating layer 212.

Thus, the electrode 210 according to an embodiment of the present disclosure includes the stepped coating layers 211 and 212 and the insulating layer 213 which protects the second coating layer 212 formed with a thickness having a relatively low height. Accordingly, the electrode 210 may enhance both stability and process efficiency while preventing a protrusion.

Hereinafter, a manufacturing device and/or a manufacturing method which manufactures the above-described electrode 210 will be described in detail.

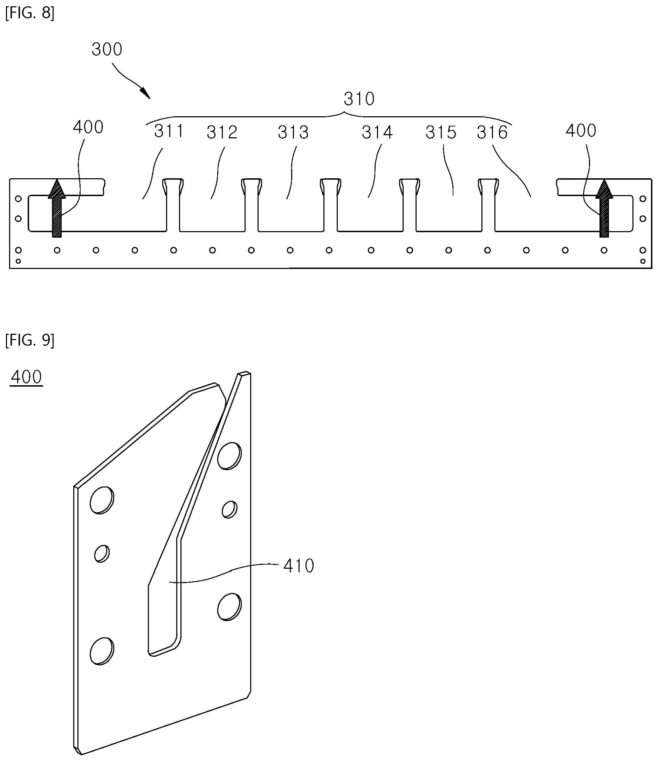

FIG. 8 is a view showing a first spacer according to an embodiment of the present disclosure.

FIG. 9 is a view showing a second spacer according to an embodiment of the present disclosure.

An electrode manufacturing device according to an embodiment of the present disclosure may manufacture the first electrode 210 and the second electrode 220 described in FIGS. 1 to 4 and FIGS. 6 and 7. The first electrode 210 and the second electrode 220 manufactured by the electrode manufacturing device may prevent a short circuit from occurring when the separator 230 located between the first electrode 210 and the second electrode 220 contracts without forming a protrusion.

To this end, the electrode manufacturing device includes a first spacer 300 which coats a substrate 210S with a first coating layer 211 with a first thickness h1, and a second spacer 400 which coats a second coating layer 212 with a second thickness h2 at one side of the first coating layer 211.

In this case, as described above, the second thickness h2 may be formed to be less than the first thickness h1. Further, accordingly, the first coating layer 211 and the second coating layer 212 may be discontinuously formed while forming a step.

The first spacer 300 coats the substrate 210S with the first coating layer 211. In this case, the first spacer 300 includes a relatively wide spacer. That is, the first spacer 300 is formed with a larger width than the second spacer 400.

The first spacer 300 includes a plurality of discharge ports 310. FIG. 8 shows, for example, an example in which the first spacer 300 includes six discharge ports (for example, 311, 312, 313, 314, 315, and 316), but the number of discharge ports 310 included in the first spacer 300 may vary.

The second spacer 400 may coat an insulating layer 213 at one side of the second coating layer 212. In this case, the second spacer 400 includes a spacer of a relatively small width. That is, the second spacer 400 is formed with a smaller width than the first spacer 300.

The second spacer 400 includes one discharge port 410. In this case, a width of the discharge port 410 of the second spacer is formed smaller than a width of the discharge port 310 of the first spacer.

For example, the second spacer 400 may be formed at both end portions of the first spacer 300. That is, the electrode manufacturing device may include two or more second spacers 400.

The second spacer 400 may be driven simultaneously with the first spacer 300. For example, while the first spacer 300 coats the first coating layer 211, the second spacer 400 may simultaneously coat the second coating layer 212. Furthermore, while the first spacer 300 coats the first coating layer 211, the second spacer 400 may simultaneously coat the second coating layer 212 and the insulating layer 213.

However, the second spacer 400 may be formed separately from the first spacer 300 and separately driven. For example, after the first spacer 300 coats the first coating layer 211, the second spacer 400 may coat the second coating layer 212 and the insulating layer 213. Alternatively, for example, after the first spacer 300 coats the first coating layer 211 and the second spacer 400 coats the second coating layer 212, the second spacer 400 may coat the insulating layer 213.

However, a method of coating the substrate 210S with the second coating layer 212 and/or the insulating layer 213 may be other than the method of using the second spacer 400. The second coating layer 212 and/or the insulating layer 213 may be formed on the substrate 210S by, for example, a spray injection method, a nozzle printing method, an inkjet printing method, an electrospinning method, or the like. In this case, the inkjet printing method includes, for example, a micro-piezo method, a bubble jet method, a thermal injection method, or the like.

Through this structure, the electrode manufacturing device according to an embodiment of the present disclosure may manufacture the first electrode 210 and the second electrode 220 with improved safety.

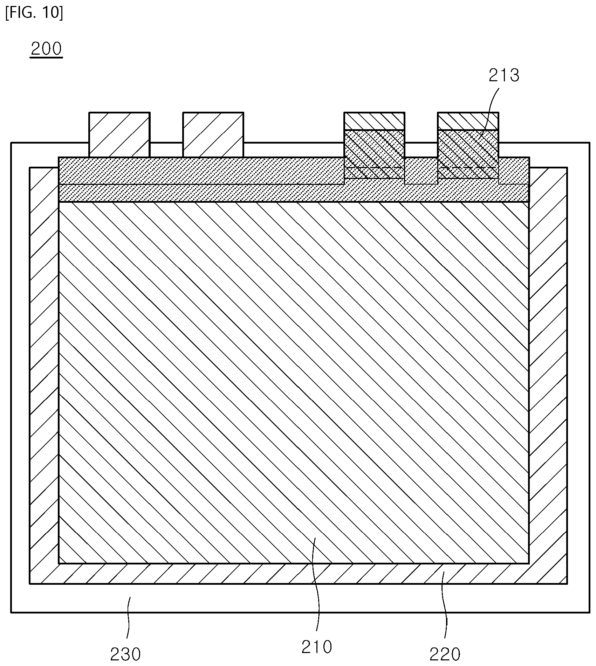

FIG. 10 is a view schematically showing an electrode assembly according to an embodiment of the present disclosure.

As described above, the secondary battery 100 according to an embodiment of the present disclosure includes an electrode assembly 200 and a case 50 which accommodates the electrode assembly 200. The electrode assembly 200 may include electrodes including a first electrode 210 and a second electrode 220, and a separator 230 provided between the first electrode 210 and the second electrode 220.

FIG. 10 shows an example in which the insulating layer 213 according to an embodiment of the present disclosure is coated on the first electrode 210. However, the insulating layer 213 may be coated on the second electrode 220, or may also be formed simultaneously on the first electrode 210 and the second electrode 220.

As shown in FIG. 10, for example, the insulating layer 213 is formed on one side of the first electrode 210. Accordingly, the insulating layer 213 may prevent a short circuit between a substrate exposed at an upper cut surface of the first electrode 210 and a coating layer of the second electrode 220 even when the separator 230 contracts.

In secondary batteries, the separator may contract as the secondary battery is repeatedly charged and discharged. In this case, a short circuit can occur when the negative electrode and the positive electrode separated by the separator come into contact with each other

Accordingly, electrodes, a secondary battery including the electrodes, and an electrode manufacturing device which manufactures the electrodes according to an embodiment of the present disclosure may provide electrodes with enhanced safety.

According to the present disclosure, it is possible to provide an electrode with enhanced quality, a secondary battery, and/or an electrode manufacturing device which manufactures the electrode.

According to the present disclosure, it is possible to provide an electrode with enhanced processability, a secondary battery, and/or an electrode manufacturing device which manufactures the electrode.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. An electrode, comprising:
a substrate;
a first coating layer on the substrate, the first coating layer having a first thickness;
a second coating layer at one side of the first coating layer, the second coating layer being on the substrate and having a second thickness; and
an insulating layer at one side of the second coating layer, the insulating layer being on the substrate.

2. The electrode as claimed in claim 1, wherein the second thickness is less than the first thickness.

3. The electrode as claimed in claim 1 or claim 2, wherein the second thickness is 10% to 80% of the first thickness.

4. The electrode as claimed in any of claims 1 to 3, wherein the first coating layer and the second coating layer are discontinuous, the first coating layer and the second coating layer having a step therebetween.

5. The electrode as claimed in any of claims 1 to 4, wherein the insulating layer is spaced apart from one side of the second coating layer at a predetermined interval and, optionally, the predetermined interval is 1 µm or less.

6. The electrode as claimed in any of claims 1 to 5, wherein the insulating layer covers at least a portion of the second coating layer.

7. The electrode as claimed in any of claims 1 to 6, wherein the insulating layer has a thickness smaller than or equal to the first thickness and greater than or equal to the second thickness.

8. A secondary battery, comprising:
an electrode assembly including an electrode according to any preceding claim and a separator in a stack; and
a case accommodating the electrode assembly..

9. An electrode manufacturing device, comprising:
a first spacer to coat a substrate with a first coating layer at a first thickness; and
a second spacer to coat a second coating layer at a second thickness at one side of the first coating layer, wherein:
the first spacer has a larger width than the second spacer, and
the second spacer coats an insulating layer at one side of the second coating layer.
